# EUROPÄISCHE PATENTSCHRIFT

(11) **EP 2 423 022 B1**
(45) Veröffentlichungstag und Bekanntmachung des Hinweises auf die Patenterteilung: **05.11.2014**
(21) Anmeldenummer: 11006866.5
(22) Anmeldetag: 23.08.2011
(51) Int. Cl.: B60J 7/057, B60J 7/185, E05F 15/16

(54) **Verstellantrieb mit Notbetätigung**
Actuating mechanism with emergency actuation
Mécanisme d'entraînement muni d'un actionnement d'urgence

(30) Priorität: 25.08.2010 DE 102010035286
(43) Veröffentlichungstag der Anmeldung: 29.02.2012
(73) Patentinhaber: Magna Car Top Systems GmbH, 74321 Bietigheim-Bissingen (DE)
(72) Erfinder: Blech, Christof, 71272 Renningen (DE); Wilke, Gunnar, 49434 Neuenkirchen-Vörden (DE)
(74) Vertreter: Völger, Silke Beatrix

(56) Entgegenhaltungen:
- DE-A1- 3 110 079
- DE-A1- 3 834 643
- DE-A1- 4 100 882
- DE-A1- 10 207 540
- DE-A1-102004 046 098
- FR-A- 1 493 089
- US-A1- 2007 051 046

## Beschreibung

Die vorliegende Erfindung betrifft einen Verstellantrieb mit Notbetätigung für Fahrzeuge, insbesondere für Kraftfahrzeuge, mit den Merkmalen des Oberbegriffs des Anspruchs 1.

Es ist bekannt, dass zum Betätigen von verschließbaren Öffnungen (Klappen, Deckel, Scheiben, Schiebedächer, Cabriolet-Dächer usw.) Elektromotoren mit Getriebeeinheiten verwendet werden. Hierbei werden entsprechend dem zu betätigenden Bauteil Über- beziehungsweise Untersetzungen mittels Getrieben verwendet. So ist zum Beispiel bei der Betätigung einer Seitenscheibe in einer Fahrzeugtür eines Kraftfahrzeuges ein möglichst schnelles Öffnen und Schließen der Scheibe gewünscht, wozu der Elektromotor mit einem Übersetzungsgetriebe ausgestattet ist. Ein weiterer Fall beschreibt beispielsweise einen Verschlusshaken eines Cabrio-Verdecks, welches bei sich schließendem Verdeck nahe der Endposition des Verdecks den verbleibenden Restschließweg des Verdecks mittels eines Verschlusshakens zuzieht. Hierbei wird nicht nur das Verdeck in seine endgültige Position gebracht, sondern der Verdeckstoff entsprechend gespannt. Ein derartiger Verschlussantrieb benötigt erhebliche Einbauräume für entsprechend ausgelegte und dimensionierte Elektromotoren, die in der Regel in einem beweglichen Verdeck, insbesondere einem Soft-Top nicht vorhanden sind. Als Abhilfe dient in diesem Fall, ein kleinerer, allerdings schwächerer Elektromotor, welcher mittels eines Untersetzungsgetriebes den Verschlusshaken betätigt und somit über eine höhere Drehzahl des Elektromotors und deren Untersetzung die benötigte Zuziehkraft überträgt.

Selbstverständlich können derartige Verstell-Nerschlussantriebe auch an einem Kofferraum oder einer Heckklappe eines Kombi-Fahrzeuges eingesetzt werden. Auch hierbei gilt, dass der Elektromotor, sowie die dem Elektromotor nachgeschalteten Über- beziehungsweise Untersetzungsgetriebe entsprechend der geforderten Lasten und Bewegungsabläufe ausgelegt werden.

Derartige Kombination von Elektromotoren und Über- beziehungsweise Untersetzungsgetrieben sind heute Standard und ersetzen die bisherigen hydraulischen Verstallantriebe zusehends.

Als Über- beziehungsweise Untersetzungsgetriebe können Zahnradgetriebe, Stirnzahnradgetriebe oder Planetengetriebe zum Einsatz kommen. Auch werden häufig Schneckengetriebe verwendet, da diese in der Regel besonders geräuscharm sind und große Kräfte übertragen können.

Die EP1 033 272 B1 zeigt ein dreistufiges Getriebe für einen Verdeckantrieb, wobei eine erste Stufe aus einem Schneckengetriebe besteht. Hierbei greift eine Schnecke in ein Schneckenrad ein, wobei die Schnecke in ihrer axialen Richtung durch eine flexible Antriebswelle angetrieben wird. Auf der Welle des Schneckenrades ist ein Zahnrad aufgebracht, welches rotationsfest mit dem Schneckenrad verbunden ist. Das Zahnrad greift in ein weiteres Zahnrad der nächsten Übersetzungsstufe ein, wobei das Übersetzungsverhältnis eine Untersetzung darstellt.

Das weitere Zahnrad ist in seiner Funktion gleichzeitig ein Planetenträger für ein Planetengetriebe, wobei wenigstens zwei Planetenräder drehbar auf dem Planetenträger (Zahnrad) gelagert sind. Bei einer Rotation des Planetenträgers werden die Planetenräder um die Mittelachse des Planetenträgers geschwenkt, wobei diese nahe der Achse des Planetenträgers mit einem kleineren Sonnenrad kämmen. Das Planetengetriebe stellt somit die dritte Übersetzungsstufe dieses Getriebes dar. Das gesamte Getriebe wird auf einer im Wesentlichen planen Montageplatte aufgebracht, wobei ein in Form und Abmessung den Getrieberädern angepasster Verschlussdeckel über das gesamte gemeinsame Getriebe aufgebracht und mit der planen Platte verschraubt wird. Der Deckel ist besonders flach ausgelegt und weist außer den Montagebefestigungen und Vorrichtungen auch noch alle wesentlichen Lagerstellen des gemeinsamen Getriebes auf. Im Bereich der planen Platte tritt die Achse des Planetenträgers und somit des Sonnenrades durch das Gehäuse hindurch, wobei die Achse endseitig als Flansch mit einer durchgehenden zentrischen Nut ausgebildet ist. Dieser Flansch mit Nut stellt die Verbindungsebene zu einem zu betätigenden weiteren Mechanismus/Bauteil dar.

Aus der gattungsgemäßen DE10 2004 046 098 A1 ist ein Verdeckverschluss für ein Fahrzeug bekannt, bei dem ein Elektromotor eine Getriebeeinheit antreibt, die wiederum mit einem Verschlusshaken eines Verdeckverschlusses verbunden ist. Hierbei wirkt der Elektromotor auf ein Winkelgetriebe der Getriebeeinheit, das über eine Welle mit einer Schnecke verbunden ist, wobei die Schnecke in ein Schneckenrad eingreift. Diese zweimalige Umlenkung des eingeleiteten Antriebsmomentes des Elektromotors ist zum Antrieb eines weiteren Getriebes vorgesehen. Das weitere Getriebe ist ein Planetenradgetriebe, bei dem ein Sonnenrad fest mit dem Schneckenrad des zuvor erwähnten Schneckengetriebes, verbunden ist. Das Sonnenrad ragt aus dem Schneckenrad hervor, wobei mit dem hervorragenden Bereich des Sonnenrades drei Planetenräder kämmen. Weiter kämmen die Planetenräder mit einem konzentrisch zum Sonnenrad angeordneten Hohlrad, wobei die Planetenräder in die Innenverzahnung des Hohlrades eingreifen. Alle drei Planetenräder sind über Lagerungen auf einem Planetenträger angeordnet, wodurch deren Position zueinander stets gewährleistet ist.

Das Hohlrad des Planetengetriebes weist weiter eine Außenverzahnung auf, in die eine unter 90° wirkende Schnecke eingreift. Diese Schnecke ist Bestandteil einer Welle, die innerhalb des Verschlussgehäuses über dessen vertikale Erstreckung angeordnet ist und mit ihrer dem Fahrgastinnenraum zugewandten Seite einen Innenmehrkant aufweist. Die Schnecke mit dem Innenmehrkant dient zur Notbetätigung des Verschlusses, wobei ein geeignetes Werkzeug, beispielsweise ein Innensechskantschlüssel durch eine Öffnung des Gehäuses in den Innenmehrkant der Notbetätigungsschnecke eingreift und somit die Schnecke in Rotationsbewegung versetzt werden kann. Im Normalbetrieb wird das Hohlrad über seine Außenverzahnung und durch die Notbetätigungsschnecke in seiner Position festgehalten, so dass bei einem Antriebsmoment des elektrischen Motors alle Getriebeteile, insbesondere der Planetenträger mit den Planetenrädern, dreht und diese Drehbewegung über geeignete Verbindungsmittel auf den Verschlusshaken übertragen werden. Die Notbetätigungsschnecke greift direkt in die Außenverzahnung des Hohlrades ein, wobei die Notbetätigungsschnecke sowie das Planetengetriebe sich in einer aufrecht stehenden vertikalen Position befinden.

Auch die DE 10 2005 015 166 A1 zeigt eine Verstelleinheit für ein Cabrio-Fahrzeug mit einer manuellen Notbetätigung. Hierbei ist in axialer Verlängerung eines Elektromotors eine Antriebswelle als Schnecke für wenigstens ein Schneckengetriebe ausgebildet, wobei die Schnecke mit Bereichen unterschiedlicher Steigung ausgebildet ist. In wenigsten einem Bereich der Schnecke weist diese eine Steigung mit geringerem Anstellwinkel auf, so dass in diesem Bereich ein mit der Schnecke kämmendes Schneckenrad bei Rotation der Schnecke gedreht werden kann, jedoch durch den geringeren Anstellwinkel sich eine Selbsthemmung bei Nichtbetätigung ergibt.

In dem vorliegenden Beispiel ist ein weiterer Bereich dieser Schnecke ebenfalls mit einer Steigung mit geringerem Anstellwinkel ausgebildet, wobei die Steigungsrichtung der Schnecke der, der ersten Schnecke entgegenwirkend ausgebildet ist. Auch hier wird bei Rotation der Schnecke ein mit der Schnecke kämmendes Schneckenrad in Rotation versetzt. Da beide Schnecken durch den geringeren Anstellwinkel und in ihrer Steigungsrichtung gegeneinander wirkend selbsthemmend sind, kann eine Selbstbetätigung des Getriebes oder der damit verbundenen und zu bewegenden Elemente nicht erfolgen. Als Notbetätigung ist im weiteren Verlauf der Schnecke ein Teilbereich der Schnecke mit einer sehr großen Steigung ausgebildet, in die ein entsprechendes Schneckenrad eingreift. Durch diese große Steigung kann bei einer Rotation des Schneckenrades eine Rotationsbewegung der Schnecke erfolgen, so dass dieser Bereich als Notbetätigung für das gesamte Getriebe wirkt. Um die Selbsthemmungen beider zuvor beschriebenen Schneckengetriebe mit geringem Anstellwinkel außer Kraft zu setzen, ist das Schneckenrad der Notbetätigung mit einem weiteren Zahnrad fest verbunden, welches in seinem Durchmesser mit einer Verzahnung der zuvor beschriebenen Schneckenräder der Getriebe mit geringerem Anstellwinkel eingreift. Die Rotationsbewegung setzt hierbei die Selbsthemmung außer Kraft.

Aus der DE 38 34 643 A1 ist eine Antriebseinheit für Vertikaltore bekannt, die einen Motor ein dem Motor nachgeschaltetes Getriebe bestehend aus Schneckenrad und Schnecke, sowie ein zwischen dem Getriebe und dem Ausgang der Antriebseinheit angeordnetem Planetengetriebe aufweist. Das Hohlrad des Planetengetriebes weist eine Außenverzahnung auf, welches mit einem Zwischenrad kämmt. Für eine Notbetätigung des Antriebs kann eine auf dem Zwischenrad angeordnete Schneckenradverzahnung mit einer Schneckenverzahnung des Nothandhebels in Eingriff gebracht werden.

Des Weiteren ist aus der DE 31 10 079 A1 ein Drehantrieb für Rollvorhänge bekannt. Die Getriebeeinheit des Drehantriebs umfasst ein Schraubenzahnrad, welches in Eingriff mit einem Schraubentrieb steht. Der Schraubentrieb ist drehbar in einem Gehäuse gelagert und kann zur Notbetätigung des Antriebs mit einer Handkurbel versehen sein.

Die vorliegende Erfindung beschäftigt sich mit dem Problem, einen Verstellantrieb zur Verstellung beweglicher Bauteile zu schaffen, der besonders flach baut und eine in der flachen Bauweise integrierte Notbetätigung beinhaltet. Der Verschlussantrieb soll mit wenigen Teilen einfach und kostengünstig herstellbar sein.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, dass zu bewegende Bauteile eines Fahrzeugs mittels eines Elektromotors und einer dem Elektromotor nachgeschalteten Getriebeeinheit zwischen Endstellungen beziehungsweise beliebigen Zwischenstellungen verstellt werden können. Hierbei kann die Bewegung des zu verstellenden Bauteils sehr schnell erfolgen, oder besonders hohe Kräfte übertragen werden. Bei einer sehr schnellen Verstellbewegung werden häufig Elektromotoren mit einem einfachen Getriebe an das zu verstellende Bauteil gekoppelt, wobei entsprechend der gewählten Übersetzung und der Antriebsdrehzahl des Elektromotors die Verstellgeschwindigkeit festgelegt werden kann.

Bei der Übertragung größerer Kräfte kommen oftmals mehrere hintereinander geschaltete Getriebe zum Einsatz, wobei diese sowohl parallel als auch in Reihe zueinander angeordnet sein können. Vorteilhaft zeigt sich bei der Übertragung größerer Kräfte, dass zumindest ein Schneckengetriebe eingesetzt wird. Hierbei ist die Schnecke häufig in der Verlängerung der Antriebswelle eines Elektromotors angeordnet, wobei die Schnecke in die Außenverzahnung eines Schneckenrades eingreift. Diese Konstellation der Verwendung eines Schneckengetriebes zeigt besondere Vorteile dadurch, dass die schraubende Bewegung der Schnecke zum Schneckenrad so gewählt werden kann, dass eine Selbsthemmung dieses Getriebes bei Nichtbetätigung eintreten kann. Somit ist auf einfache Weise gewährleistet, dass eine unmotivierte Verstellung des Getriebes nicht von selber erfolgt.

Weiter zeigt es sich von Vorteil, dass bei der Verwendung eines Schneckengetriebes keine stoßartigen Belastungen und Kraftspitzen auftreten. Durch eine hohe Untersetzung, entsprechend der Steigung der Schnecke gewählt, können große Kräfte und große Drehmomente übertragen werden, wobei diese Art des Getriebes besonders geräuscharm arbeitet.

Zur Reduzierung des benötigten Einbauraumes ist die platzsparende Anordnung des Schneckengetriebes besonders vorteilhaft, so dass erfindungsgemäß parallel zum Schneckenrad noch ein Planetenradgetriebe angeordnet ist. Selbst diese parallele Bauweise zweier Getriebe benötigt nur einen geringen Einbauraum, da beide mit ihren Bauteilen relativ flach bauend ausgebildet werden können. Beide Getriebe können somit vorteilhaft in einem gemeinsamen Gehäuse untergebracht werden, wobei die Wahl korrespondierender Abmessungen zweier Getriebegehäusehälften zueinander eine einfache Gestaltung des Gehäuses und deren Montage ermöglicht. Durch eine Trennebene zweier Gehäusehälften, lassen sich somit alle wesentlichen Bauteile, insbesondere auch die Aufnahme und Fixierung des Elektromotors innerhalb des Gehäuses abbilden. Mittels separat ausgebildeten Lagerpunkten oder Öffnungen für Befestigungsmitteln kann das Gehäuse schnell und einfach zusammengebaut werden und im Fahrzeug positioniert werden.

Um den Bauraum und das Gewicht des Gehäuses zur Aufnahme des Elektromotors und der Getriebe optimal zu gestalten, kann das Gehäuse aus einem Werkstoff mit einer hohen Steifigkeit hergestellt, beziehungsweise aus Metall und/oder einem Verbundwerkstoff bestehen. Selbstverständlich ist es möglich, dass auch Elemente des Antriebs oder des/der Getriebe zumindest teilweise aus Kunststoff gefertigt werden können.

Entsprechend der Erfindung ist ein Schneckengetriebe unmittelbar mit dem Antriebsmotor gekoppelt, wobei parallel angeordnet zum Schneckenrad des Schneckengetriebes ein Planetenradgetriebe vorgesehen ist. Das Planetenradgetriebe ist von dem Schneckenrad entkoppelt und parallel zu diesem angeordnet, so dass das Hohlrad, wie auch die Planetenräder, frei vom Schneckenrad des Schneckengetriebes bewegt werden können. Als einzige feste Verbindung zwischen beiden Getrieben ist das Sonnenrad vorgesehen, welches mit dem Schneckenrad des Schneckengetriebes fest verbunden ist. Über einem auf der dem Schneckenrad entgegen gesetzten Seite des Planetenradgetriebes angeordneten Planetenträger sind die Planetenräder mittels fest mit dem Planetenträger verbundener Achsen positioniert, wobei die Achsen der Planetenräder auch als Wellen ausgebildet sein können. Der Planetenträger ist so ausgestaltet, dass er in dem vorliegenden, erfindungsgemäßen Beispiel wie eine Verschlussscheibe das gesamte Planetenradgetriebe überdeckt.

Auf der dem Elektromotor gegenüber liegenden Seite des Planetenradgetriebes ist im Gehäuse eine Schnecke für eine Notbetätigung vorgesehen. Diese Schnecke greift in eine Außenverzahnung des Hohlrades des Planetenradgetriebes und ist mit ihrem freien Ende über ein Winkelgetriebe mit Kegelzahnrädern von außerhalb des Gehäuses betätigbar. Bei normalem Antrieb über den Elektromotor ist die Notbetätigung lastfrei, wobei das Hohlrad des Planetenradgetriebes über die Verbindung zur Schnecke der Notbetätigung in seiner Position fixiert bleibt. Im Notbetrieb wird über die Schnecke der Notbetätigung eine Drehung auf das Hohlrad eingeleitet, welches durch seine Innenverzahnung mit den kämmenden Planetenrädern und dessen Planetenträger auf das zu verstellende Bauteil übertragen wird. Die Antriebsschnecke und das Schneckenrad des Schneckengetriebes drehen sich hierbei nicht, so dass nur die Planetenräder um das feststehende Sonnenrad herum in Bewegung gesetzt werden. Es liegt in diesem Fall quasi eine Umkehrung der Wirkungsweise des Antriebs vor.

Durch die Ausführung eines besonders flach bauenden Getriebegehäuses, welches in seinen Dickenabmessungen maximal denen des Außendurchmessers des Antriebsmotors entspricht, ist es möglich, derartige Verstell-/Verschlussantriebe auch in Einbauräume mit geringsten Abmessungen einzubauen. Diese können insbesondere sein, der vordere Aufnahmebereich eines bewegbaren Daches oder einer Heckklappe eines Fahrzeuges, wobei in diesem Fall der VerstellantriebNerschlussantrieb zur Verriegelung oder zur Positionierung des zu verstellenden Elementes in einer Endlage verwendet wird. Die zu verstellenden Bauteile können beispielsweise außer einem Fahrzeugdach oder einer Heckklappe weitere Klappen wie ein Kofferraum, Schiebedächer oder Sitzverstellungen, Fensterbetätigungen oder dergleichen sein. Im vorliegenden Beispiel bietet es sich an, dass der Verstellantrieb mit einem Verschlussmittel in Form eines Verschlusshakens in Wirkverbindung steht, wobei das Verschluasmittel orthogonal zur Getriebeeinheit angeordnet beziehungsweise ausgerichtet sein kann.

Die Notbetätigung wird über ein endseitig der Notbetätigungsschnecke angeordnetes Kegelradgetriebe bewirkt. Hierbei ragt orthogonal zur Mittenachse der Schnecke der Notbetätigung die Achse eines Kegelzahnrades aus dem Gehäuse hervor, wobei diese Achse eine Außenkontur oder eine Innenkontur einer Mehrfachverzahnung aufweisen kann. Diese Mehrfachverzahnung dient als Adapter zur Aufnahme eines handelsüblichen Werkzeugs, wie beispielsweise eines Innensechskantschlüssels oder eines Außensechskantschlüssels, so dass durch diese Betätigung das Kegelzahnrad auf das Kegelzahnrad der Notbetätigungsschnecke wirkt und somit das Hohlrad des Planetengetriebes in Rotation gesetzt werden kann. Im Normalbetrieb ist die Öffnung der Notbetätigungsaufnahme beispielsweise durch eine geeignete Abdeckung verschlossen.

Weitere wichtige Merkmale und Vorteile der Erfindung ergeben sich aus den Unteransprüchen, aus den Zeichnungen und/oder aus der zugehörigen Figurenbeschreibung anhand der Zeichnungen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeisplele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig.1: eine Draufsicht auf den Verschlussantrieb mit einseitig geöffnetem Gehäuse,
- Fig.2: eine perspektivische Ansicht auf das einseitig geöffnete Gehäuse mit Schneckengetriebe, Planetenradgetriebe und Notbetätigung,
- Fig.3: einen Schnitt durch das Getriebe mit Notbetätigung.

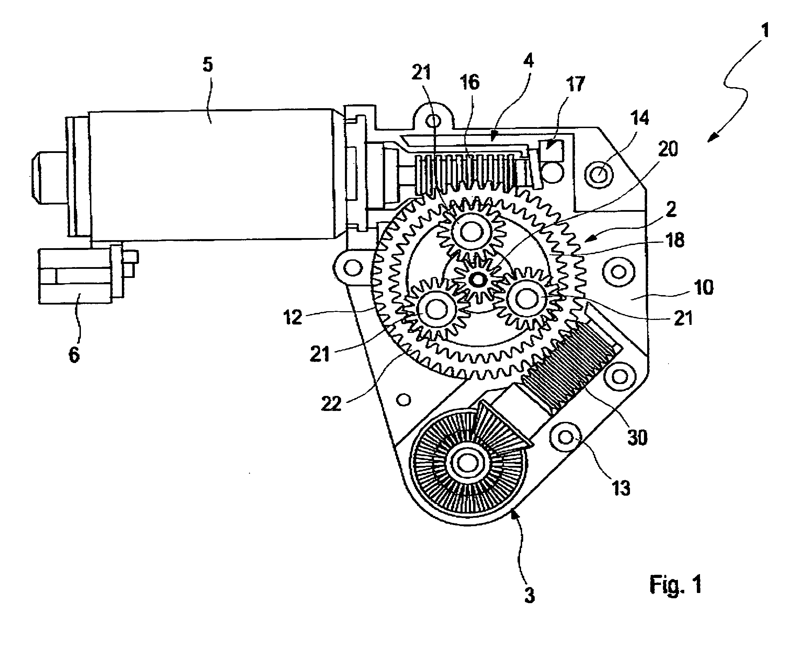

Figur 1 zeigt eine Draufsicht auf den VerstellantriebNerschlussantrieb 1 mit einseitig geöffnetem Gehäuse 7, wobei der zu erkennende Teil des Gehäuses 7 dem Unterteil 10 des Gehäuses 7 entspricht. In einem Eckbereich des Gehäuses 7 ist der Antriebsmotor 5, vorzugsweise ein Elektromotor, aufgenommen und über einen Formschluss in seiner Lage mit dem Gehäuse 7 fixiert. Der Antriebsmotor 5 wird über einen elektrischen Anschluss 6 mit elektrischer Energie versorgt. Auf der dem Gehäuse 7 zugewandten Seite des Antriebsmotors 5 ist die Antriebswelle des Antriebsmotors 5 verlängert in das Gehäuse 7 hineinragend, wobei dieser Bereich im Wesentlichen als Antriebsschnecke 16 ausgebildet ist. Da diese Antriebsschnecke 16 frei in das Gehäuse hineinragt und bei Betrieb eine Biegung durch das Schneckenrad 18 erfährt, ist die Antriebsschnecke 16 mit ihrem dem Elektroantrieb 5 entgegen gesetzten Ende an einer Abstützung 17 gelagert, beziehungsweise abgestützt.

Die Antriebsschnecke 16 greift mit ihrer schraubenförmigen Verzahnung in ein Schneckenrad 18 ein, dass für das gesamte Getriebe als Antriebszahnrad 18 wirkt. Das Schneckenrad 18 weist eine korrespondierende Zahngeometrie zur Antriebsschnecke 16 auf und ist im Gehäuse 7 über eine Achse 25 drehbar gelagert. Mit geringem Abstand ist parallel zum Schneckenrad 18 ein Planetenradgetriebe 2 angeordnet, dass wie zuvor das Schneckenrad 18 im Wesentlichen durch zylindrische Aufnahmen 12 des Gehäuses 7 (bestehend aus Gehäuseunterteil 10 und Gehäuseoberteil 11) aufgenommen und geführt wird. Diese zylindrischen Aufnahmen 12 sind segmentweise sowohl am Gehäuseunterteil 10 wie auch am Gehäuseoberteil 11 vorhanden, so dass eine vollständige Führung sowohl des Schneckenrades 18 wie auch des Hohlrades 22 bei geschlossenem Gehäuse 7 gewährleistet ist.

Das Hohlrad 22 des Planetenradgetriebes 2 ist mit einer Innenverzahnung 23 und einer Außenverzahnung 24 versehen, wobei die Innenverzahnung 23 zum Eingriff dreier Planetenräder 21 dient. Die Planetenräder 21 sind als kleine Zahnräder drehbar über Achsen 26 auf einem Planetenträger 35 angeordnet, so dass deren Position zueinander unveränderbar gesichert ist. Zum Zentrum des Hohlrades 22 weisend greifen die Planetenräder 21 in die Außenverzahnung 24 eines Sonnenrades 20 ein, wobei das Sonnenrad 20 durch Formschluss fest mit dem Schneckenrad 18 des Schneckenradgetriebes 4 verbunden ist

Die Außenverzahnung 24 des Hohlrades 22 ist in ihrer Zahngeometrie so gestaltet, dass die Zahnspitzen der Außenverzahnung 24 in der zylindrischen Aufnahme 12 des Gehäuses 7 geführt werden können. Auf der entgegen gesetzten Seite des Schneckenradgetriebes 4 zum Planetenradgetriebe 2 ist eine Notbetätigung 3 im Gehäuse 7 eingebracht, welche in Form einer Schnecke 30 in die Außenverzahnung 23 des Hohlrades 22 eingreift. Durch diesen Eingriff der Schnecke 30 in die Außenverzahnung 24 des Hohlrades 22 wirkt die Schnecke 30 selbsthemmend, so dass das Hohlrad 22 bei Normalbetrieb fixiert wird. Diese Selbsthemmung zwischen dem Hohlrad 22 und der Schnecke 30 wird durch eine entsprechende kleine schraubenförmige Steigung der Schnecke 30 erreicht,

Bei Betrieb des Elektromotors 5 wird die Antriebsschnecke 16 in Rotation versetzt, womit diese Rotation auf das Schneckenrad 18 übertragen wird. Durch die feste Verbindung zwischen Sonnenrad 20 und dem Schneckenrad 18 dreht sich das Sonnenrad 20 synchron zum Schneckenrad 18, so dass durch den Zahneingriff der Planetenräder 21 und des Sonnenrades 20 diese entsprechend ihrer Achsen 26 in Rotation versetzt werden. Diese Rotation bewirkt eine Drehung des Planetenträgers 35, der über die Achsen 26 mit den Planetenradem 21 gekoppelt ist.

Die Anordnung des Schneckengetriebes 4, des Planetengetriebes 2 sowie der Notbetätigung 3 ermöglicht eine besonders flache Ausgestaltung des gesamten Verschlussantriebes 1, wobei die Trennung des Gehäuses 7 in ein Gehäuseunterteil 10 und ein Gehäuseoberteil 11 sehr vorteilhaft für einen schnellen Zusammenbau ist. Dies wird durch im Kontaktbereich beider Gehäuseteile 10, 11 vorhandener Gehäusefixierungen 13 unterstützt, so dass beide Gehäuseteile 10, 11 einfach und leicht zusammen geführt werden können. Über Bohrungen 14 können bei Verwendung von geeigneten Befestigungsmitteln die beiden Gehäuseteile 10, 11 zueinander verschraubt werden, wobei weitere derartige Bohrungen 14 auch zur Montage und Fixierung des gesamten Verstellantriebs/Verschlussantriebes 1 dienen können.

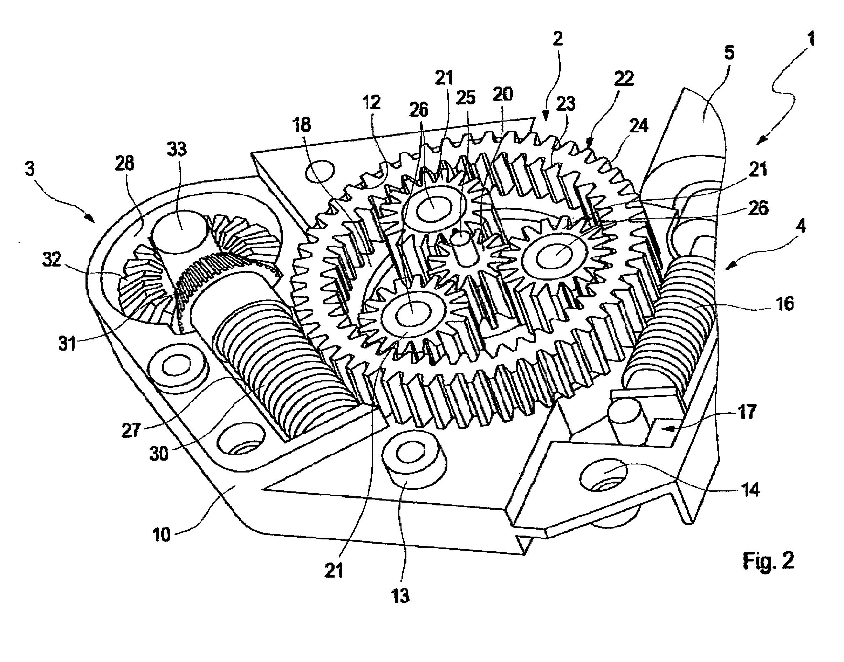

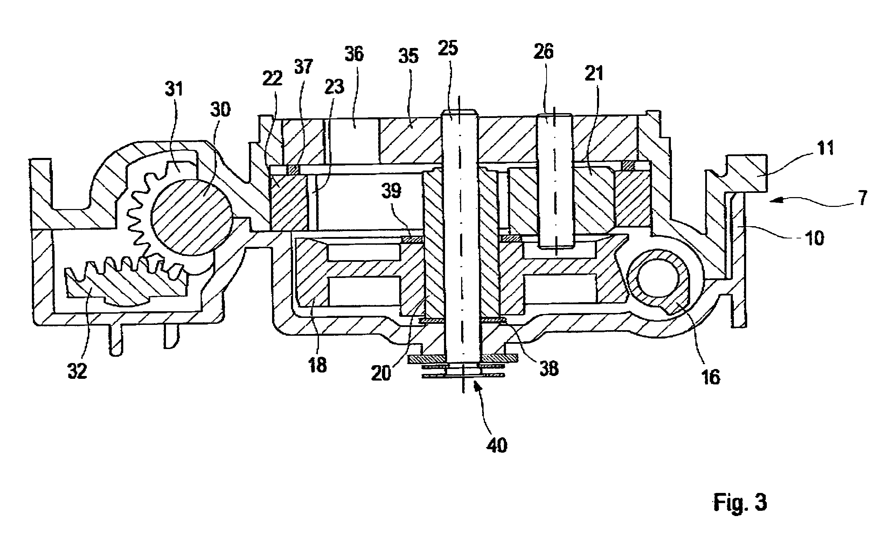

Die perspektivische Ansicht auf das einseitig geöffnete Gehäuse 7 des VerstellantriebsNerschlussantriebes 1 ist in Figur 2 dargestellt. Hierbei sind besonders gut das Schneckenradgetriebe 4, das parallel zum Schneckenrad 18 positionierte Planetenradgetriebe 2 sowie die sich mit dem Hohlrad 22 des Planetenradgetriebes 2 in Eingriff befindende Notbetätigung 3 zu erkennen. Die Schnecke 30 der Notbetätigung 3 wird hierbei in einer hälftigen zylindrischen Aufnahme 27 des Gehäuseunterteils 10 und des Gehäuseoberteils 11 aufgenommen und geführt. Die Schnecke 30 ist an ihrem freien Ende als Kegelzahnrad I 31 ausgebildet, welches in ein Kegelzahnrad II 32 eingreift. Das Kegelzahnrad II 32 ist fest mit einer Achse 33 verbunden, welche zumindest aus einer Seite des Gehäuses 7 herausragt. Das Kegelzahnrad II 32 ist an seinem Außendurchmesser zylindrisch ausgebildet, so dass das Kegelzahnrad II 32 in einer zylindrischen Aufnahme 28 des Gehäuseunterteils 10 aufgenommen und geführt wird. Die aus dem Gehäuse 7 herausragende Achse 33 ist zur Aufnahme eines Notbetätigungswerkzeuges mit einem Innenmehrkant oder einem Außenmehrkant versehen, so dass bei Eingriff des Notbetätigungswerkzeugs eine Drehbewegung über die Achse 33 auf das Kegelzahnrad II 32 erfolgt. Diese Drehbewegung wird über die Kegelradverzahnung zwischen dem Kegelzahnrad I 31 und dem Kegelzahnrad II 32 auf die Schnecke 30 übertragen, die ihrerseits diese Rotationsbewegung mit dem Zahneingriff zwischen der Schnecke 30 und dem Hohlrad 22 auf dieses überträgt. Das in der zylindrischen Aufnahme 12 aufgenommene und geführte Hohlrad 22 wird somit in Rotation versetzt, wobei über die Innenverzahnung 23 des Hohlrades 22 die Planetenräder 21 in Eigenrotation versetzen. Diese Eigenrotation der Planetenräder 21 wird mittels der Achsen 26 auf den Planetenträger 35 übertragen, wobei der Planetenträger 35 sich wie in Figur 3 abgebildet als Verschlussscheibe 35 für das Getriebe vorgesehen ist. Mittels einer Öffnung 36 für einen Mitnehmer wird somit die Rotationsbewegung des Planetenträgers / Verschlussscheibe 35 auf ein Verschlusselement zum Beispiel einen Verschlusshaken oder sonstige Kinematiken übertragen.

Wird diese Drehbewegung des Planetenträgers 35 über die Notbetätigung 3 erzeugt, bleibt das mit dem Schneckenrad 18 fest verbundene Sonnenrad 20 durch die Eigenhemmung zwischen dem Schneckenrad 18 und Antriebsschnecke 16 lagefixiert. Eine Drehung der Achse des Antriebmotors 5 kann somit nicht erfolgen.

Der in Figur 3 abgebildete Schnitt durch das Getriebe mit Notbetätigung 3 zeigt das Zusammenwirken zwischen dem Schneckenradgetriebe 4, dem Planetenradgetriebe 2 und dem Planetenträger 35, der zur Übertragung der Drehbewegung mittels einer Öffnung 36 für einen Mitnehmer für das zu verstellende Element dient. Hierbei ist das Gehäuse 7 in geschlossener Darstellung des Gehäuseunterteils 10 und des Gehäuseoberteils 11 abgebildet. Das Schneckenrad 18 ist, wie schon in Figur 2 beschrieben, mittels eines Formschlusses mit dem Sonnenrad 20 verbunden, wobei das Sonnenrad 20 sich über eine Gleitscheibe 38 auf der Innenseite des Gehäuseunterteils 10 abstützt. Das Schneckenrad 18 ist zwischen seiner Verzahnung und dem Aufnahmebereich des Sonnenrades 20 zurückgesetzt ausgebildet, so dass die Achsen 26 der Planetenräder 21 geringfügig in diese Zurücknehmung eingreifen können. Dieser Überstand der Achsen 26 ist notwendig, da die Planetenräder 21 mittels eines Gleitrings 39 auf einen inneren Durchmesser des Schneckenrades 18 zumindest bereichsweise aufliegen und somit in ihrer axialen Richtung geführt werden. Das Hohlrad 22 wird in axialer Richtung durch einen stufenförmigen Absatz des Gehäuseunterteils 10 in axialer Richtung geführt, wobei der stufenförmige Absatz als Gleitring 37 ausgebildet ist. Dieser Gleitring 37 kann auch einstückig aus dem Hohlrad 22 hervorragend ausgebildet sein. Der Gleitring 37 dient dazu, dass das Hohlrad 22 axial in seiner Position bestimmt ist, wobei die schmale Ausführung des Gleitrings 37 die axiale Reibung des Hohlrades 22 zum Gehäuseoberteil 11 und dem Planetenträger 35 erheblich verringert. Der Planetenträger 35 dient zur Aufnahme der Achsen 26 der Planetenräder 21 und wird in seinem Außendurchmesser vorteilhaft zylindrisch ausgeführt, im Gehäuseoberteil 11 geführt. Der Planetenträger 35 weist eine Öffnung 36 für einen Mitnehmer auf, wobei der Mitnehmer in Form eines Stiftes oder einer in den Planetenträger 35 eingreifenden Schraube ausgeführt sein kann. Selbstverständlich sind jegliche andere Ausführungsformen des Mitnehmers denkbar, so dass an Stelle einer Öffnung 36 ein hervorstehendes Koppelelement denkbar wäre.

Der Planetenträger 35 sowie das Sonnenrad 20 und das Schneckenrad 18 werden im Wesentlichen durch eine Achse 25 gelagert. Hierbei kann im Durchtrittsbereich des Planetenträgers 35 die Achse 25 mit diesem verpresst sein. Auch ist es denkbar, dass die Achse 25 einstückig aus dem Planetenträger 35 hervorsteht. Auf der dem Planetenträger 35 entgegen gesetzten Seite der Achse 25 ragt diese durch das Gehäuseunterteil 10 hindurch und ist auf der Außenseite des Gehäuseunterteils 10 mittels einer Zapfen- oder Bolzensicherung 40 axial gesichert und fixiert.

### Bezugszeichenliste

- 1: Verstelleinheit, Verschlussantrieb, Verstellantrieb
- 2: Planetenradgetriebe
- 3: Notbetätigung
- 4: Schneckenradgetriebe
- 5: Antriebsmotor
- 6: elektrischer Anschluss
- 7: Gehäuse

- 10: Gehäuseunterteil
- 11: Gehäuseoberteil
- 12: zylindrische Aufnahme
- 13: Gehäusefixierung
- 14: Bohrung

- 16: Antriebsschnecke
- 17: Abstützung Antriebsschnecke
- 16: Schneckenrad, Antriebszahnrad

- 20: Sonnenrad
- 21: Planetenrad
- 22: Hohlrad
- 23: Innenverzahnung
- 24: Außenverzahnung
- 25: Achse, Achse Sonnenrad
- 26: Achse, Achse Planetenrad
- 27: zylindrische Aufnahme
- 28: zylindrische Aufnahme

- 30: Schnecke
- 31: Kegelzahnrad I
- 32: Kegelzahnrad II

- 35: Planetenträger, Verschlussscheibe
- 36: Öffnung für Mitnehmer
- 37: Gleitring, Spannring
- 38: Gleitscheibe
- 39: Gleitscheibe
- 40: Zapfensicherung, Bolzensicherung

## Patentansprüche

1. Verstelleinheit (1) für ein Fahrzeug, insbesondere für eine Kraftfahrzeug,
- mit einem in einem Gehäuse (7) untergebrachten Schneckenradgetriebe (4), wobei das Schneckenradgetriebe (4) über einen Antriebsmotor (5) angetrieben wird,
- einem über das Schneckenradgetriebe (4) angetriebenen Planetenradgetriebe (2)
- und einer auf das Planetenradgetriebe (2) wirkenden Notbetätigung (3), wobei
- das Hohlrad (22) des Planetenradgetriebes (2) eine Außenverzahnung (24) aufweist und mit der Außenverzahnung (24) von zylindrischen Aufnahmen (12) des Gehäuses (7) aufgenommen und geführt wird, und
- die Außenverzahnung (24) des Hohlrads (22) mit der Schnecke (30) der Notbetätigung (3) in Eingriff steht, **dadurch gekennzeichnet,**
- **dass** die Schnecke (30) von ihrem mit dem im Zahneingriff zum Hohlrad (22) befindenden abgewandten Ende als Kegelzahnrad I (31) ausgebildet ist,
- **dass** das Kegelzahnrad I (31) der Schnecke (30) mit einem orthogonal zur Mittenachse der Schnecke (30) angeordneten Kegelzahnrad II (32) in Zahneingriff steht und die Achse (33) des Kegelzahnrads II (32) zumindest an einer Seite aus dem Gehäuse (7) herausragt, und
- **dass** die Schnecke (30) in etwa in der Ebene des Planetenradgetriebes (2) angeordnet ist und sich das Kegelzahnrad II (32) etwa in der Ebene des Schneckenradgetriebes (4) befindet.

2. Verstelleinheit (1) für ein Fahrzeug nach Anspruch 1, wobei die zylindrischen Aufnahmen (12) des Gehäuses (7) teilweise von einem Gehäuseunterteil (10) und einem Gehäuseoberteil (11) gebildet werden.

3. Verstelleinheit (1) für ein Fahrzeug nach Anspruch 1 oder 2,wobei die Schnecke (30) in einer zylindrischen Aufnahme (27) des Gehäuses (7) aufgenommen ist, und dass diese zylindrische Aufnahme (27) je zur Hälfte durch das Gehäuseunterteil (10) und das Gehäuseoberteil (11) gebildet wird.

4. Verstelleinheit (1) für ein Fahrzeug nach Anspruch 1, wobei die Achse (33) des Kegelzahnrads II (32) an wenigstens einem Ende einen Innenmehrkant oder einen Außenmehrkant aufweist.

5. Verstelleinheit (1) für ein Fahrzeug nach Anspruch 1, wobei das Kegelzahnrad II (32) mit seinem Außendurchmesser in einer zylindrischen Aufnahme (28) des Gehäuses (7), insbesondere des Gehäuseunterteils (10) aufgenommen und geführt wird.

6. Verstelleinheit (1) für ein Fahrzeug nach einem oder mehrerer der vorangehenden Ansprüche, wobei die Schnecke (30) mit dem Außendurchmesser der Schneckenverzahnung innerhalb der zylindrischen Aufnahme (27) geführt wird.

7. Verstelleinheit (1) für ein Fahrzeug nach einem oder mehrerer der vorangehenden Ansprüche, wobei die Außenfläche der Außenverzahnung (24) des Hohlrads (22) der einer durch die Verzahnung unterbrochenen Außenfläche eines Zylinders entspricht.

## Claims

1. Adjusting unit (1) for a vehicle, in particular for a motor vehicle,
- having a worm gear mechanism (4) which is accommodated in a housing (7), the worm gear mechanism (4) being driven via a drive motor (5),
- a planetary gear mechanism (2) which is driven via the worm gear mechanism (4),
- and an emergency actuating means (3) which acts on the planetary gear mechanism (2),
- the internal gear (22) of the planetary gear mechanism (2) having an external toothing system (24) and being received and guided by cylindrical receptacles (12) of the housing (7) by way of the external toothing system (24), and
- the external toothing system (24) of the internal gear (22) being in engagement with the worm (30) of the emergency actuating means (3), **characterized**
- **in that** the worm (30) is configured from its remote end which is in tooth engagement with the internal gear (22) as a bevel gearwheel I (31),
- **in that** the bevel gearwheel (31) of the worm (30) is in tooth engagement with a bevel gearwheel II (32) which is arranged orthogonally with respect to the centre axis of the worm (30), and the axle (33) of the bevel gearwheel II (32) protrudes out of the housing (7) at least on one side, and
- **in that** the worm (30) is arranged approximately in the plane of the planetary gear mechanism (2) and the bevel gearwheel II (32) is situated approximately in the plane of the worm gear mechanism (4).

2. Adjusting unit (1) for a vehicle according to Claim 1, the cylindrical receptacles (12) of the housing (7) being formed partially by a housing lower part (10) and a housing upper part (11).

3. Adjusting unit (1) for a vehicle according to Claim 1 or 2, the worm (30) being received in a cylindrical receptacle (27) of the housing (7), and in each case half of the said cylindrical receptacle (27) being formed by the housing lower part (10) and the housing upper part (11).

4. Adjusting unit (1) for a vehicle according to Claim 1, the axle (33) of the bevel gearwheel II (32) having a polygonal socket or an external polygon at at least one end.

5. Adjusting unit (1) for a vehicle according to Claim 1, the bevel gearwheel II (32) being received and guided by way of its external diameter in a cylindrical receptacle (28) of the housing (7), in particular of the housing lower part (10).

6. Adjusting unit (1) for a vehicle according to one or more of the preceding claims, the worm (30) being guided by way of the external diameter of the worm toothing system inside the cylindrical receptacle (27).

7. Adjusting unit (1) for a vehicle according to one or more of the preceding claims, the outer face of the external toothing system (24) of the internal gear (22) corresponding to an outer face of a cylinder, which outer face is interrupted by the toothing system.

## Revendications

1. Unité de réglage (1) pour un véhicule, en particulier pour un véhicule automobile,
- comprenant une transmission à vis sans fin (4) logée dans un boîtier (7), la transmission à vis sans fin (4) étant entraînée au moyen d'un moteur d'entraînement (5),
- une transmission planétaire (2) entraînée au moyen de la transmission à vis sans fin (4),
- et un actionnement d'urgence (3) agissant sur la transmission planétaire (2),
- la couronne (22) de la transmission planétaire (2) comprenant une denture extérieure (24) et étant, à l'aide de la denture extérieure (24), reçue et guidée par des logements cylindriques (12) du boîtier (7), et
- la denture extérieure (24) de la couronne (22) s'engrenant avec la vis sans fin (30) de l'actionnement d'urgence (3), **caractérisée**
- **en ce que** la vis sans fin (30) est réalisée sous forme de roue dentée conique 1 (31) à partir de son extrémité opposée en engrènement avec la couronne (22),
- **en ce que** la roue dentée conique 1 (31) de la vis sans fin (30) est en engrènement avec une roue dentée conique II (32) disposée de manière orthogonale à l'axe médian de la vis sans fin (30) et l'axe (33) de la roue dentée conique II (32) fait saillie au moins d'un côté hors du boîtier (7), et
- **en ce que** la vis sans fin (30) est disposée approximativement dans le plan de la transmission planétaire (2) et la roue dentée conique II (32) se trouve approximativement dans le plan de la transmission à vis sans fin (4).

2. Unité de réglage (1) pour un véhicule selon la revendication 1, dans laquelle les logements cylindriques (12) du boîtier (7) sont formés en partie par une partie inférieure de boîtier (10) et une partie supérieure de boîtier (11).

3. Unité de réglage (1) pour un véhicule selon la revendication 1 ou 2, dans laquelle la vis sans fin (30) est reçue dans un logement cylindrique (27) du boîtier (7), et ce logement cylindrique (27) est formé respectivement pour moitié par la partie inférieure de boîtier (10) et la partie supérieure de boîtier (11).

4. Unité de réglage (1) pour un véhicule selon la revendication 1, dans laquelle l'axe (33) de la roue dentée conique II (32) présente, à au moins une extrémité, un contour polygonal interne ou un contour polygonal externe.

5. Unité de réglage (1) pour un véhicule selon la revendication 1, dans laquelle la roue dentée conique II (32) est reçue et guidée, par son diamètre extérieur, dans un logement cylindrique (28) du boîtier (7), en particulier de la partie inférieure de boîtier (10).

6. Unité de réglage (1) pour un véhicule selon l'une quelconque ou plusieurs des revendications précédentes, dans laquelle la vis sans fin (30) est guidée, par le diamètre extérieur de la denture de vis sans fin, à l'intérieur du logement cylindrique (27).

7. Unité de réglage (1) pour un véhicule selon l'une quelconque ou plusieurs des revendications précédentes, dans laquelle la surface extérieure de la denture extérieure (24) de la couronne (22) correspond à une surface extérieure, interrompue par la denture, d'un cylindre.
